# EUROPÄISCHE PATENTSCHRIFT

(11) **EP 3 056 777 B1**
(45) Veröffentlichungstag und Bekanntmachung des Hinweises auf die Patenterteilung: **04.04.2018**
(21) Anmeldenummer: 16150441.0
(22) Anmeldetag: 07.01.2016
(51) Int. Cl.: F16J 15/3204, B65C 9/04, F16J 15/3264, F16J 15/34

(54) **BEHÄLTERBEHANDLUNGSMASCHINE MIT EINEM DREHTELLERDIREKTANTRIEB**
MACHINE FOR TREATING CONTAINERS COMPRISING A ROTATING DISC DIRECT DRIVE
MACHINE DE TRAITEMENT DE RECIPIENT COMPRENANT UN ENTRAINEMENT DIRECT DE PLATEAU ROTATIF

(30) Priorität: 11.02.2015 DE 202015100659 U
(43) Veröffentlichungstag der Anmeldung: 17.08.2016
(73) Patentinhaber: Krones AG, 93073 Neutraubling (DE)
(72) Erfinder: Triebel, Joerg, 93073 Neutraubling (DE); Fischer, Gerhard, 93073 Neutraubling (DE); Meissner, Soeren, 93073 Neutraubling (DE)
(74) Vertreter: Grünecker Patent- und Rechtsanwälte PartG mbB

(56) Entgegenhaltungen:
- EP-A1- 0 443 617
- EP-A2- 1 596 488
- CN-A- 101 741 165
- CN-U- 202 231 533
- GB-A- 2 140 101
- US-A1- 2007 284 958

## Beschreibung

Die Erfindung betrifft eine Behälterbehandlungsmaschine mit den Merkmalen des Oberbegriffs von Anspruch 1.

Eine Behälterbehandlungsmaschine kann beispielsweise als Etikettiermaschine mit Etikettieraggregaten, einem Transportkarussell und daran umfänglich angeordneten Behälteraufnahmen ausgebildet sein, wobei die Behälter zunächst in den Behälteraufnahmen aufgenommen und anschließen zur Etikettierung an den Etikettieraggregaten vorbeigeführt werden. Beim Vorbeilauf am Etikettieraggregat werden die Behälteraufnahmen synchron mit dem Aufbringen des Etiketts geschwenkt, so dass die Etikette möglichst gleichmäßig auf dem Behälterumfang aufgebracht werden. Hierzu weisen die Behälteraufnahmen jeweils einen Drehteller auf, der individuell mit einem Drehtellerdirektantrieb drehbar ist. Dadurch kann jeder Drehteller individuell von einer Maschinensteuerung für den Etikettierprozess angesteuert werden und ist so besonders flexibel auf verschiedene Etiketten- und Behältertypen anpassbar. Zum Schutz des Drehtellerdirektantriebs gegen Verschmutzungen dient ein Wellendichtsystem, bei dem Dichtringe an der Motorwelle anliegen. Beispielsweise ist ein derartiger Drehtellerdirektantrieb aus der EP 1 596 488 A2 bekannt.

Nachteilig dabei ist, dass die Dichtringe des Wellendichtsystems nach einer gewissen Betriebszeit gelegentlich Beschädigungen aufweisen und dadurch Einlaufspuren an der Motorwelle entstehen. Die Behebung dieses Schadens ist dann entsprechend wartungs- und kostenaufwändig.

Die EP 1 596 488 A2 offenbart einen Antriebsmotor mit integrierten Wellenverbindungselementen.

Die CN 202231533 U offenbart ein Dichtsystem für einen Motor.

Die US 2007/0284958 A1 offenbart einen Motor zum Antrieb eines Behälterdrehtellers in einer Etikettiermaschine.

Die CN 101741165 A offenbart eine Wellendichtung für einen Mahlwerksmotor zur Herstellung von Sojamilch.

Die GB 2 140 101 A offenbart eine Dichtung für eine Flüssigkeitspumpe.

Die EP 0 443 617 A1 offenbart eine Vorrichtung zum Zentrieren und Ausrichten von Gefäßen mit einem Drehtisch, der durch einen in einer Nutkurve laufenden Rollenhebel gedreht wird.

Aufgabe der vorliegenden Erfindung ist es daher, eine Behälterbehandlungsmaschine mit einem Drehtellerdirektantrieb zum Antrieb des Drehtellers bereitzustellen, der weniger wartungsaufwändig ist.

Zur Lösung dieser Aufgabenstellung stellt die Erfindung eine Behälterbehandlungsmaschine mit den Merkmalen des Anspruchs 1 bereit. Vorteilhafte Ausführungsformen sind in den Unteransprüchen genannt.

Es hat sich bei umfangreichen Untersuchungen des Verschleißes überraschenderweise herausgestellt, dass sich trotz der Abschirmung des Wellendichtsystems durch den Drehteller Schmutz auf dessen Stirnseite ablagern kann, der oftmals auch Glassplitter oder andere abrasive Partikel enthält. Durch den eindringenden Schmutz kann es dann im Bereich der Dichtringe des Wellendichtsystems zu einer erhöhten Abnutzung der Dichtlippen und der Welle kommen und damit zu einem erhöhten Wartungsaufwand.

Dadurch, dass bei der erfindungsgemäßen Behälterbehandlungsmaschine das Dichtsystem des Drehtellerdirektantriebs die Ableitfläche zum Ableiten von eindringendem Schmutz aus dem Kontaktbereich der beiden Reibpartner umfasst, wird der eindringende Schmutz nicht mehr im Bereich der Dichtlippe angestaut, sondern nach außen abgeleitet. Folglich ist die Reibung der beiden Reibpartner des Dichtsystems geringer, wodurch weniger Verschleiß entsteht und der Drehtellerdirektantrieb insgesamt weniger wartungsaufwändig ist.

Die Behälterbehandlungsmaschine, beispielsweise eine Etikettiermaschine, kann ein Transportkarussell mit den umfänglich angeordneten Behälteraufnahmen mit jeweils einem Drehteller und einem Drehtellerdirektantrieb umfassen. Das Transportkarussell der Behälterbehandlungsmaschine kann um eine vertikale Achse mittels eines Antriebs drehbar ausgebildet sein. "Vertikal" kann hier bedeuten, dass dies die Richtung ist, die auf den Erdmittelpunkt gerichtet ist. Die Behälterbehandlungsmaschine kann in einer Behälterherstellungs- und/oder Getränkeverarbeitungsanlage angeordnet sein. Die Behälterbehandlungsmaschine kann einer Abfüllanlage zum Abfüllen eines Produkts in die Behälter vor- oder nachgeordnet sein. Die Vorrichtung kann auch einer Streckblasmaschine für PET-Flaschen nachgeordnet sein. Die Behälterbehandlungsmaschine kann eine Etikettier- und/oder Bedruckungsmaschine für Behälter sein. Jeweils eine Behälteraufnahme kann einen Drehteller, einen Drehtellerdirektantrieb mit einem Dichtsystem umfassen.

Die wenigstens eine Behälteraufnahme kann zum Transport der Behälter vorgesehen sein. Die Behälteraufnahme kann zusätzlich eine Zentrierglocke, Halteklammern oder dergleichen zur Positionierung eines Behälters in der Aufnahme umfassen. Der Drehtellerdirektantrieb kann zum Rotieren und/oder Schwenken des Drehtellers ausgebildet sein. Der Drehteller kann an der Unterseiten einen nach unten abstehenden Ringfortsatz als Schutz vor grobem Schmutz umfassen.

Die Behälter können dafür vorgesehen sein, Getränke, Hygieneartikel, Pasten, chemische, biologische und/oder pharmazeutische Produkte aufzunehmen. Die Behälter können Kunststoffflaschen, Glasflaschen, Dosen und/oder Tuben sein. Bei den Kunststoffbehältern kann es sich im speziellen um PET-, HD-, PE- oder TP-Behälter bzw. Flaschen handeln.

Die Welle des Drehtellerdirektantriebs kann vertikal angeordnet sein. Dies kann hier bedeuten, dass diese in Richtung der Schwerkraft bzw. auf den Erdmittelpunkt ausgerichtet ist. Der Motor kann ein positionsregelbarer Elektromotor sein, vorzugsweise ein Servomotor, Torque- bzw. Hohlwellenmotor. Die Welle des Motors kann ein- oder mehrteilig ausgebildet sein. Insbesondere kann die Welle ein oder mehrere Verbindungselemente zum Drehteller umfassen. Der Drehteller kann vertikal über dem Drehtellerdirektantrieb angeordnet sein.

Das Dichtsystem ist an einer äußeren, vertikal oben liegenden Stirnseite des Drehtellerdirektantriebs angeordnet und umfasst ein die Stirnseite abdeckendes und die Ableitfläche bildendes Schutzelement, das vom Kontaktbereich radial nach außen abfallend ausgebildet ist, so dass eindringender Schmutz nach außen abgeleitet wird. Die vertikal oben liegende Stirnseite kann die Außenseite sein, die aus einer vertikal nach unten auf das Dichtsystem gerichteten Blickrichtung sichtbar ist. Anders ausgedrückt, kann dies die Außenseite des Dichtsystems sein, die dem Drehteller zugewandt ist. Dass "das Schutzelement die Stirnseite abdeckt", kann hier bedeuten, dass das Schutzelement die Stirnseite bildet. "Radial nach außen abfallend" kann hier bedeuten, dass das Schutzelement von der Welle her nach außen abfällt, so dass der Schmutz durch die Schwerkraft von der Welle weggleitet.

Das Schutzelement kann einen Radialwellendichtring mit einer radial nach innen ansteigenden Dichtlippe umfassen, deren radial nach innen gerichtetes Ende an der Welle anliegt. Dadurch ist der Aufbau des Schutzelements besonders einfach und das Dichtsystem kann bei bestehenden Drehtellerdirektantrieben ohne hohen Aufwand nachgerüstet werden. "Radial nach innen ansteigende Dichtlippe" kann hier bedeuten, dass die Dichtlippe ab dem inneren, an der Welle anliegenden Ende radial nach außen abfällt. Das Dichtsystem und/oder der Radialwellendichtring können rotationssymmetrisch zur Rotationsachse der Welle ausgebildet sein.

"Radial nach außen" bzw. "radial nach innen" kann sich hier jeweils auf die Rotationsachse der Welle des Drehtellerdirektantriebs beziehen. Die Rotationsachse der Welle kann eine Symmetrieachse für das Dichtsystem bzw. auch für den Motor und/oder den Drehteller sein.

Vertikal unterhalb der Dichtlippe kann wenigstens eine weitere vorzugsweise radial nach innen ansteigend ausgebildete Dichtlippe angeordnet sein und zwischen den Dichtlippen kann ein Schmierstoff eingebracht sein. Einerseits wird durch die zusätzliche Dichtlippe das Eindringen des Schmutzes in den Motor noch stärker verhindert und andererseits durch den Schmierstoff eine noch geringere Reibung zwischen den Dichtlippen und der Welle erzielt. Dadurch ist der Verschleiß an der Welle besonders gering. Der Schmierstoff kann ein zur Wellenschmierung geeignetes Fett sein.

Der Radialwellendichtring kann einen Trägerring umfassen, von dem die Dichtlippen radial nach innen abstehen, wobei am Trägerring ein Federring zum Andrücken der Dichtlippen an die Welle angeordnet ist. Dadurch werden die Dichtlippen besonders gleichmäßig an die Welle angedrückt. Der Trägerring und die Dichtlippen können einstückig ausgebildet sein. Der Trägerring kann im Wesentlichen zylindrisch oder konisch und konzentrisch zur Welle ausgebildet sein.

Der Trägerring bzw. die Dichtlippen können aus einem flexiblen Material, wie beispielsweise Gummi oder Silikon ausgebildet sein. Dadurch werden leichte Unebenheiten an der Welle ausgeglichen.

Eine mit dem Gehäuse des Motors lösbar verbundene Dichtkassette kann einen gegenüber dem Gehäuse feststehenden Außenring umfassen, in dem der Radialwellendichtring angeordnet ist. Dadurch ist das Dichtsystem besonders einfach bei der Wartung austauschbar.

Ein vertikal oben liegendes Ende des Trägerrings kann mit dem Außenring verbunden sein und der Federring kann an dem gegenüberliegenden unteren Ende des Trägerrings angeordnet sein. Dadurch ergibt sich eine besonders günstige Hebelwirkung und der Federring kann kleiner und damit kompakter ausgebildet sein.

Das Schutzelement kann einen mit der Welle mitdrehend verbundenen Gamma-Ring mit einem Schutzblech und einem Axialwellendichtring umfassen, um den eindringenden Schmutz im Betrieb radial nach außen wegzuschleudern. Da das Schutzelement den Gamma-Ring umfasst, der mit der Welle mitdrehend verbunden ist, wird der eindringende Schmutz zusätzlich zur Schwerkraft durch die Zentrifugalkräfte nach außen weggeschleudert. Das Schutzblech des Gamma-Rings kann radial nach außen abfallend ausgebildet sein, so dass er die vertikal obenliegende Stirnseite des Dichtsystems bildet. Das Schutzblech kann beispielsweise über eine Presspassung oder durch Aufschrumpfen mit der Welle verbunden sein. Der Axialwellendichtring kann unmittelbar vertikal unterhalb des Schutzblechs angeordnet sein und durch dieses gehaltert sein. Das Dichtsystem kann eine Dichtkassette mit einem Radialwellendichtring umfassen, der vertikal unterhalb des Gamma-Rings angeordnet ist. Dadurch ist eine doppelte und damit noch sicherere Abdichtung der Welle gewährleistet.

Der Axialwellendichtring kann eine radial nach außen abfallende Dichtlippe umfassen, deren äußeres Ende an einer oberen Stirnseite der Dichtkassette anliegt, um den vom Gamma-Ring nicht wegschleuderbaren Schmutz nach außen abzuleiten. Dadurch ergibt sich eine besonders gute Abdichtung zwischen dem Gamma-Ring und der Dichtkassette, bei der sich besonders wenig Schmutz auf dem Axialwellendichtring dauerhaft einlagert. Axialwellendichtring kann hier bedeuten, dass die Dichtfläche zur Rotationsachse der Welle senkrecht angeordnet ist.

Das Schutzelement umfasst einen mit der Welle mitdrehend verbundenen Innenring mir einem radial nach außen abfallenden konischen Teil und einen gegenüber dem Gehäuse feststehenden Außenring mit einer ringförmigen Dichtlippe, wobei die Dichtlippe am konischen Teil des Innenrings anliegt. Durch den radial nach außen abfallenden konischen Teil des Innenrings und die daran anliegende ringförmige Dichtlippe wird einerseits Schmutz durch die Schwerkraft nach außen abgeleitet und andererseits sind alle Reibpartner Teil des Dichtsystems. Dadurch muss beim Verschleiß nicht mehr der gesamte Motor, sondern lediglich das Dichtsystem ausgetauscht werden. Der mit der Welle mitdrehend verbundene Innenring kann einen zylindrischen Teil umfassen, der an seinem oberen Rand mit dem Innenrand des konischen Teils verbunden ist. Der zylindrische und konische Teil können einteilig, beispielsweise als Blechumformelement ausgebildet sein. Die ringförmige Dichtlippe kann dabei an einem oberen, radial außenliegenden Ende des konischen Teils anliegen.

Der Außenring kann einen Trägerring aus einem unflexiblen Material umfassen, an dessen oberem Ende die Dichtlippe aus einem flexiblen Material ausgebildet ist. Dadurch kann der Außenring in eine entsprechende Passung des Motorgehäuses eingebracht werden und ist trotz genauer Passung besonders einfach auswechselbar. Das unflexible Material kann ein Metall sein, beispielsweise Stahl, Messing oder Aluminium. Das flexible Material kann beispielsweise Gummi oder Silikon sein.

Der Außenring umfasst einen Radialwellendichtring, der mit wenigstens einer radial nach innen gerichteten Dichtlippe am Innenring anliegt, wobei insbesondere ein Federring zum Andrücken der radial nach innen gerichteten Dichtlippe an den Innenring ausgebildet ist. Dadurch ist der Motor zweifach besonders gut abgedichtet. Dadurch, dass die radial nach innen gerichtete Dichtlippe an dem Innenring anliegt, entsteht der Verschleiß an dem Innenring und nicht an der Welle. Dadurch muss bei der Wartung lediglich das Dichtsystem und nicht der Motor getauscht werden, was besonders kostengünstig ist.

Der Radialwellendichtring kann einteilig mit der ringförmigen Dichtlippe ausgebildet sein. Dadurch ist das Dichtsystem besonders kostengünstig aufgebaut.

Denkbar ist auch, dass in Bezug auf die Lagerung und/oder Abdichtung des Drehtellerdirektantriebs der Drehteller selbst einen Teil der Welle bildet und/oder das Dichtsystem am Drehteller ausgebildet ist. Das Dichtsystem kann dabei an einer äußeren, vertikal unten liegenden Unterseite des Drehtellers oder eines mit der Welle fest verbundenen, tellerförmigen Adapterelements angeordnet sein und eine die Unterseite abdeckendes und die Ableitfläche bildendes Schutzelement umfassen. Dadurch kann der Schmutz erst gar nicht zwischen den Drehteller und den Drehttellerdirektantrieb eindringen und gelangt so nicht zur Welle des Motors.

Das Schutzelement kann einen mit einem Gehäuse des Drehtellerdirektantriebs fest verbundenen Axialwellendichtring mit einer radial nach außen ansteigenden Dichtlippe umfassen, deren radial nach außen gerichtetes Ende an der Unterseite anliegt. Dadurch entsteht der Kontaktbereich zwischen dem nach außen gerichteten Ende der Dichtlippe und der Unterseite des Drehtellers bzw. des Adapterelements und der Schmutz kann so besonders einfach nach unten abfließen. Der Verschleiß der Reibpartner ist so besonders gering. Die Dichtlippe kann aus einem flexiblen Material, wie beispielsweise Gummi bestehen. "Fest verbunden" kann hier bedeuten, dass der Axialwellendichtring im Betrieb gegenüber dem Gehäuse nicht verdreh- und/oder verschiebbar ist. Allerdings kann der Axialwellendichtring zur Wartung mit Werkzeugen lösbar verbindbar ausgebildet sein. Das Schutzelement kann ein ringförmiges Aufnahmeblech mit einem U-förmigen Profil als Fassung für die Dichtlippe umfassen. Das Schutzelement kann an einem zylindrischen Ring angeordnet sein, der insbesondere der Außenring einer Dichtkassette mit einem Radialwellendichtring ist. Der zylindrische Ring bzw. die Dichtkassette können hier im Gehäuse austauschbar ausgebildet sein.

Der Axialwellendichtring kann zusätzlich eine radial nach innen ansteigenden Dichtlippe umfassen, deren radial nach innen gerichtetes Ende an der Unterseite anliegt und die zusammen mit der radial nach außen ansteigenden Dichtlippe eine Y-Anordnung bildet. Durch die Y-Anordnung der beiden Dichtlippen entsteht eine noch besser Abdichtung gegen feine Schmutzpartikel.

Das Schutzelement kann einen mit dem Drehteller oder mit dem tellerförmigen Adapterelement fest verbundenen Radialwellendichtring mit einer radial nach innen abfallenden Dichtlippe umfassen, deren radial nach innen gerichtetes Ende an einem zylindrischen Laufring anliegt, der mit einem Gehäuse des Motors und/oder mit einer Aufnahme des Drehtellerdirektantriebs fest verbunden ist. Dadurch kann der Schmutz auf der schrägen Dichtlippe zum zylindrischen Laufring hin ablaufen und steht nicht im Kontaktbereich an. Um dennoch weiter in das Dichtsystem einzudringen, müsste der Schmutz dann zusätzlich entgegen der Schwerkraft nach oben zwischen Dichtlippe und Laufring hindurch fließen. Dadurch ist der Drehtellerdirektantrieb besonders gut vor dem eindringenden Schmutz geschützt. Auch hier kann die Dichtlippe aus einem flexiblen Material, wie beispielsweise Gummi bestehen. Ferner kann bei dieser Ausbildung des Dichtsystems der Laufring austauschbar ausgebildet sein, wodurch er bei einem Verschleiß leicht gewechselt werden kann. "Fest verbunden" kann hier bedeuten, dass der Radialwellendichtring im Betrieb gegenüber dem Drehteller oder dem tellerförmigen Adapterelement nicht verdreh- und/oder verschiebbar ist. Der Radialwellendichtring kann über eine Fassung mit dem Drehteller oder dem tellerförmigen Adapterelement lösbar verbindbar sein.

Der Laufring kann durch eine zylindrische Außenseite einer Dichtkassette zur Dichtung der Welle gebildet werden. Durch die zusätzliche Dichtkassette kann die Welle selbst noch besser gegen feinen Schmutz abgedichtet werden. Ferner kann im Laufring unmittelbar unterhalb des Kontaktbereichs eine Nut ausgebildet sein. Dadurch wird eine Abrisskante geschaffen, so dass der Schmutz besser aus dem Kontaktbereich abgeleitet wird. Ferner kann zwischen dem radial nach innen gerichteten Ende der Dichtlippe und dem Gehäuse des Motors ein vertikaler Abstand vorgesehen sein, um ein Ansammeln von Schmutz zu vermeiden. Denkbar ist auch, dass das Gehäuse des Motors zum besseren Abführen des eindringenden Schmutzes im Bereich unterhalb des Schutzelements nach außen abfallend ausgebildet ist.

Weitere Merkmale und Vorteile der Erfindung werden nachfolgend anhand der in den Figuren dargestellten Ausführungsbeispiele erläutert. Dabei zeigt:
- Fig. 1: als technischen Hintergrund ein Ausführungsbeispiel des Drehtellerdirektantriebs mit einer ersten Ausführungsform des Dichtsystems in einer seitlichen Ansicht;
- Fig. 2: als technischen Hintergrund die erste Ausführungsform des Dichtsystems aus der Fig. 1 in einer Detailansicht;
- Fig. 3: als technischen Hintergrund eine zweite, alternative Ausführungsform des Dichtsystems in einer seitlichen Detailansicht;
- Fig. 4: eine dritte, erfindungsgemäße Ausführungsform des Dichtsystems in einer seitlichen Detailansicht;
- Fig. 5: als technischen Hintergrund eine vierte, alternative Ausführungsform des Dichtsystems in einer seitlichen Detailansicht;
- Fig. 6: als technischen Hintergrund eine fünfte, alternative Ausführungsform des Dichtsystems in einer seitlichen Detailansicht;
- Fig. 7: als technischen Hintergrund eine sechste, alternative Ausführungsform des Dichtsystem in einer seitlichen Detailansicht;
- Fig. 8: als technischen Hintergrund eine siebte, alternative Ausführungsform des Dichtsystems in einer seitlichen Detailansicht; und
- Fig. 9: ein Ausführungsbeispiel einer Behälterbehandlungsmaschine mit einem Drehtellerdirektantrieb.

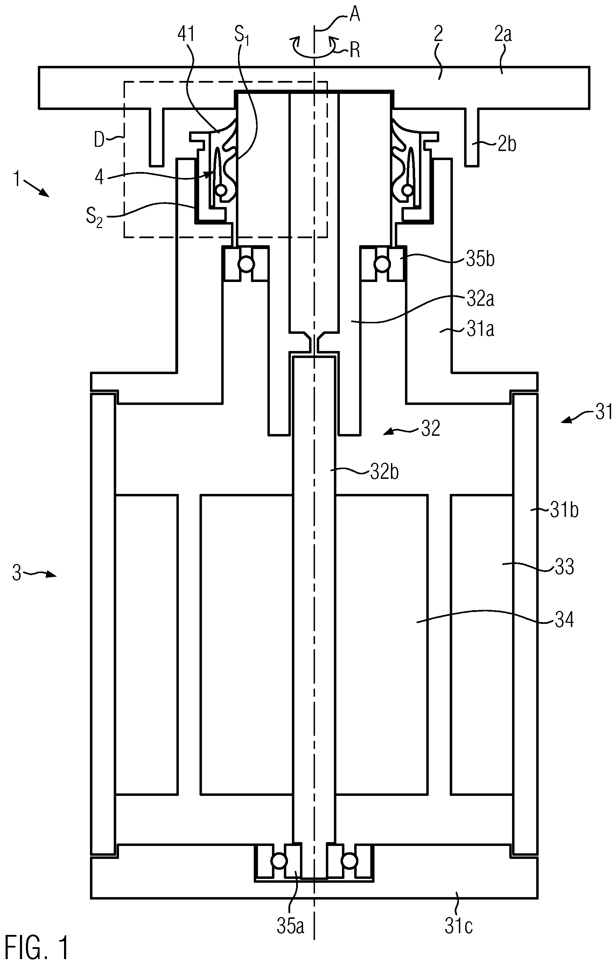

In der Fig. 1 ist als technischer Hintergrund ein Ausführungsbeispiel des Drehtellerdirektantriebs 1 mit einer ersten Ausführungsform des Dichtsystems 4 in einer seitlichen Schnittansicht dargestellt. Zu sehen ist der Drehtellerdirektantrieb 1 mit dem Motor 3, in dessen Gehäuse 31 sich der Stator 33 und der Rotor 34 befinden. Der Rotor 34 ist mit der Welle 32 verbunden, an deren vertikal oberem Ende wiederum der Drehteller 2 befestigt ist. Die Welle 32 ist hier beispielsweise mehrteilig aus einer Innenwelle 32b und einem Verbindungsstück 32a zum Drehteller 2 aufgebaut. Es ist jedoch auch denkbar, dass die Welle 32 einteilig ausgebildet ist.

Das Motorgehäuse 31 besteht aus einem Gehäuserumpf 31b, der an den Enden mit dem Gehäusedeckel 31a und dem Gehäuseboden 31c abgeschlossen ist. Die Welle 32 wird durch zwei Kugellager 35a und 35b im Gehäusedeckel 31a bzw. im Gehäuseboden 31c drehbar gelagert - denkbar sind hier jedoch auch andere geeignete Lagertypen.

Wird nun am Stator 33 ein geeigneter Wechselstrom angelegt, so wird der Rotor 34 durch die elektromagnetischen Kräfte in Bewegung versetzt und damit die Welle 32 und der Drehteller 2 gedreht. Der Motor ist hier beispielsweise als Servomotor ausgebildet und umfasst weiter einen hier nicht näher dargestellten Drehgeber (beispielsweise Hall-Sensoren oder ein optischer bzw. magnetischer Encoder). Dadurch kann die gewünschte Winkeldrehlage der Welle 32 und damit des Drehtellers 2 durch eine hier nicht dargestellte Motorregelung genau geregelt werden.

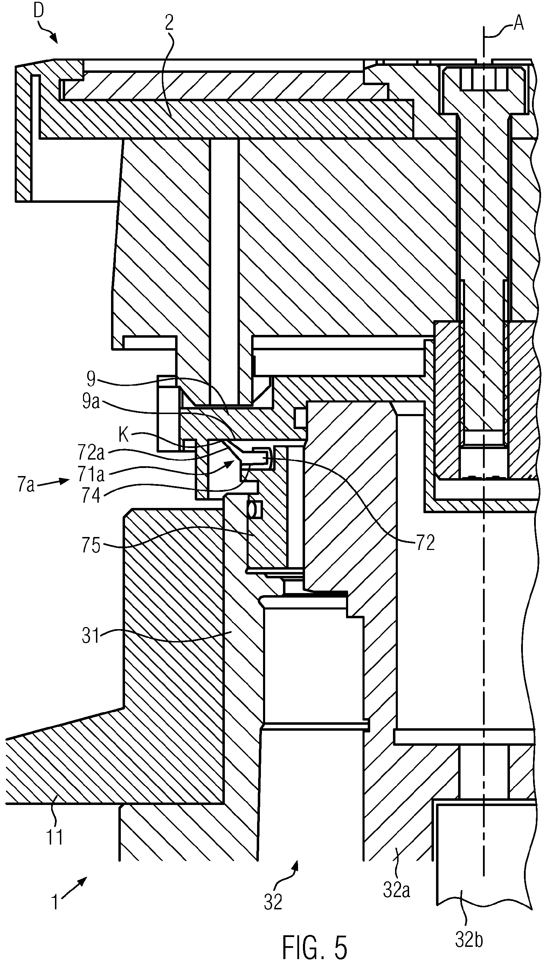

Der in der Fig. 1 dargestellte Drehtellerdirektantrieb 1 befindet sich beispielsweise am Transportkarussell einer Behälterbehandlungsmaschine, beispielsweise einer Etikettiermaschine, die weiter unten anhand der Fig. 5 genauer beschrieben wird. Dadurch können Behälter auf dem Drehteller 2 bei der Etikettierung in gewünschter Art und Weise gedreht werden.

Der Drehteller 2 umfasst eine kreisförmige Platte 2a auf deren Oberseite die Behälter aufgenommen werden und einen von der Unterseite nach unten abstehenden Ringfortsatz 2b, mit dem das Eindringen von grobem Schmutz verhindert wird.

Um den Motor 3 vor eindringendem Schmutz zu schützen, ist die Motorwelle 32 im Bereich ihres Durchtritts durch den Gehäusedeckel 31a mit dem Dichtsystem 4 abgedichtet (Detail D). Dies ist an der äußeren, vertikal obenliegenden Stirnseite mit einem Schutzelement 41 ausgebildet, das radial nach außen abfällt, so dass eindringender Schmutz nach außen abgeleitet wird.

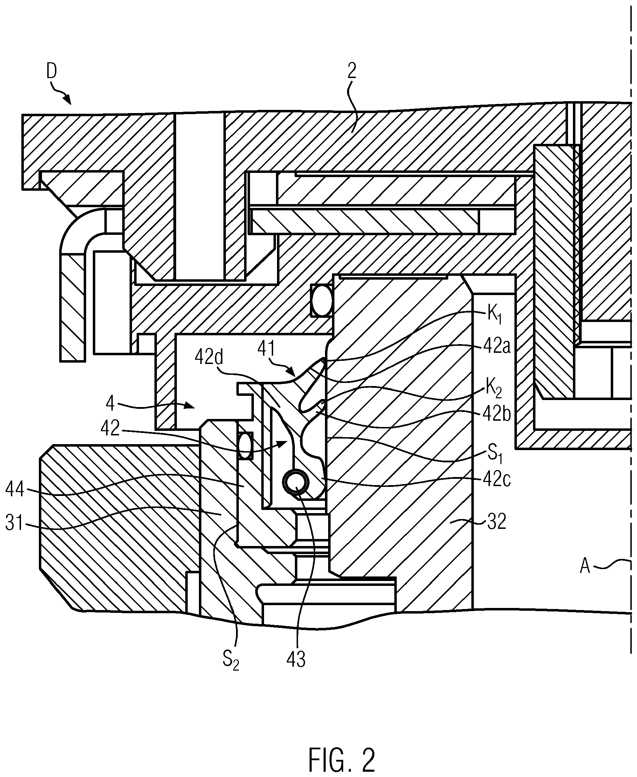

Die nachfolgend in Bezug auf die Detailansichten der Figuren 2 - 8 beschriebenen Elemente der Dichtsysteme 4, 5, 6, 7a, 7b, 8a, 8b sind jeweils rotationssymmetrisch um die Drehachse A des Direktantriebs 1 ausgebildet.

Das Detail D der Fig. 1 ist genauer in der Fig. 2 dargestellt. Zu sehen ist hier, dass die erste Ausführungsform des Dichtsystems 4 einen mit dem Gehäuse 31 feststehend verbundenen Außenring 44 umfasst, der den Radialwellendichtring 42 mit dem Trägerring 42d und den davon radial nach innen abstehenden Dichtlippen 42a und 42b aufnimmt. Die inneren Enden der Dichtlippen 42a und 42b liegen an den Kontakten K₁ und K₂ an der Welle 32 an, wodurch das Eindringen von Schmutz in den Motor 3 verhindert wird.

Der Radialwellendichtring 42 ist mit seinen Trägerring 42d am vertikal obenliegenden Ende mit dem Außenring 44 verbunden. Ferner ist am gegenüberliegenden unteren Ende des Trägerrings der Federring 43 zu sehen. Dieser drückt den zusätzlichen Dichtungsrand 42c sowie die beiden Dichtlippen 42a und 42b gegen die Fläche S₁ der Welle 32. Dadurch wird bei vertretbarer Reibung die gewünschte Dichtwirkung erzielt.

Zwischen den beiden Dichtlippen 42a und 42b ist ein hier nicht näher dargestelltes Schmiermittel eingebracht, um den Verschleiß der Welle 32 zu minimieren. Ebenso befindet sich ein Schmiermittel zwischen der unteren Dichtlippe 42b und dem Dichtungsrand 42c. Das Schmiermittel ist beispielsweise Fett.

Das gesamte Dichtungssystem 4 ist als Dichtkassette ausgebildet, die als Ganzes in die Fläche S₂ des Gehäuses 31 eingepresst werden kann.

Dadurch, dass die vertikal obenliegende Dichtlippe 42a radial nach innen ansteigend ausgebildet ist, bildet diese das Schutzelement 41 und der eindringende Schmutz wird nach außen hin abgeleitet. Folglich können sich keine Verschmutzungsreste am Kontakt K₁ anlagern und der Verschleiß wird dadurch minimiert.

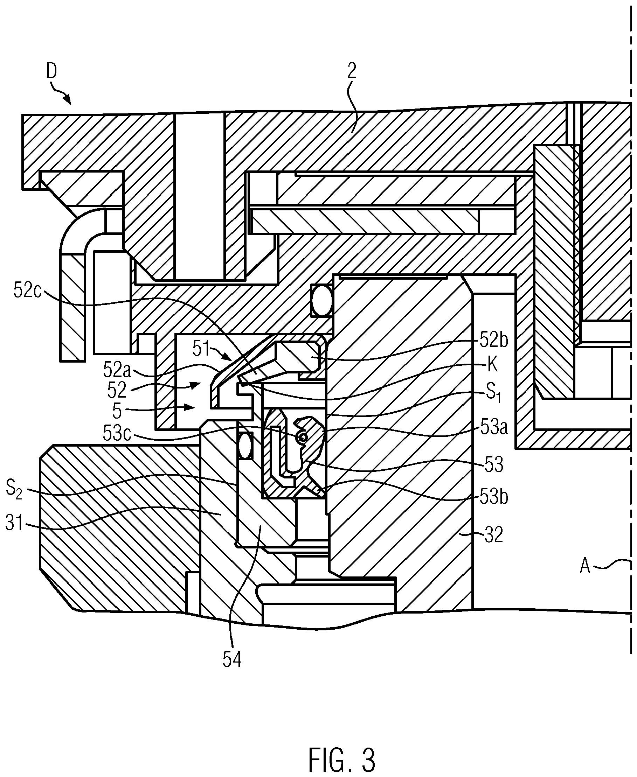

In der Fig. 3 ist als technischer Hintergrund eine zweite, alternative Ausführungsform des Dichtsystems 5 in einer seitlichen Detailansicht gezeigt und ist anstelle des Dichtsystems 4 in der Fig. 1 bzw. 2 vorgesehen (der Ausschnitt der Fig. 3 entspricht dem Detail D der Fig. 1). Zu sehen ist, dass das Dichtsystem 5 einen Gamma-Ring 52 mit dem Schutzblech 52a und dem Axialwellendichtring 52b umfasst, der mit der Welle 32 mitdrehend verbunden ist, beispielsweise durch Aufpressen auf die zylindrische Fläche S₁. Der Gamma-Ring 52 verläuft mit dem radial nach außen abfallenden Schutzblech 52a schirmartig über der Dichtkassette 53, 54, so dass eindringender Schmutz sowohl durch die Schwerkraft abgeleitet, als auch durch die Rotation weggeschleudert wird.

Zusätzlich befindet sich auf der Unterseite des Schutzblechs 52a der Axialwellendichtring 52b, der im Bereich des Kontakts K am Außenring 54 anliegt. Der Außenring 54 ist wiederum feststehend mit dem Gehäuse 31 des Drehtellerdirektantriebs 1 verbunden. Bei einer Drehung der Motorwelle 32 dreht sich also der Axialwellendichtring 52b gegenüber dem Außenring 54. Auch der Axialwellendichtring 52b ist radial nach außen hin abfallend ausgebildet, wodurch eindringender Schmutz herausgeschleudert wird und sich nicht im Bereich K anlagern kann. Dadurch wird ein Verschleiß direkt an der Motorwelle 32 verhindert.

Darüberhinaus ist in der Fig. 3 zu sehen, dass das Dichtsystem 5 im Außenring 54 einen Radialwellendichtring 53 umfasst. Die beiden Dichtlippen 53a und 53b werden mittels des Federrings 53c an die zylindrische Fläche S₂ der Welle 32 gedrückt. Dadurch wird ein Eindringen von feinen Schmutzpartikeln in den Motor 3 vermieden.

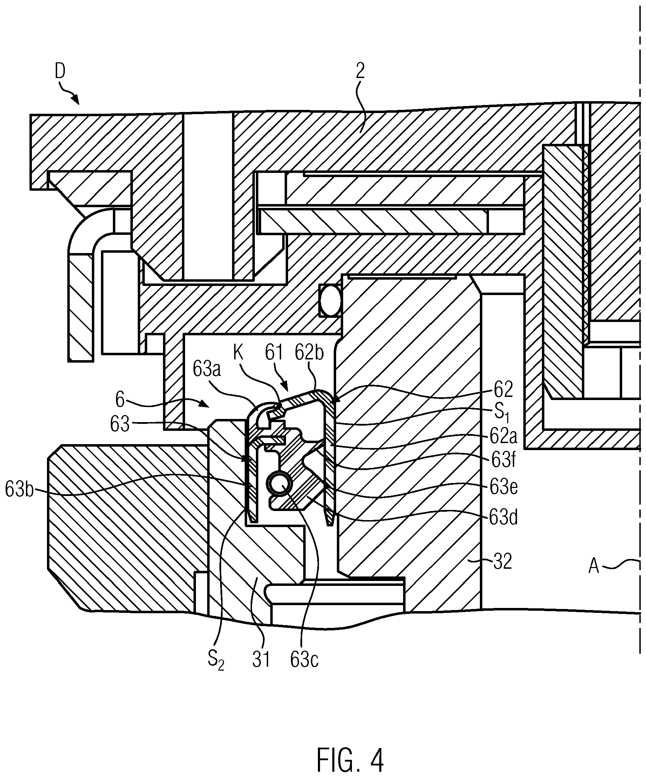

In der Fig. 4 ist eine dritte, erfindungsgemäße Ausführungsform des Dichtsystems 6 in einer seitlichen Detailansicht zu sehen (der Ausschnitt der Fig. 4 entspricht dem Detail D der Fig. 1). Das Dichtsystem 6 ist beim Drehtellerdirektantrieb 1 alternativ zum Dichtsystem 4 der Fig. 1 und 2 denkbar.

Zu sehen ist, dass das Dichtsystem 6 einen mit der Welle 32 mitdrehend verbundenen Innenring 62 und einen mit dem Motorgehäuse 31 feststehend verbundenen Außenring 63 umfasst. Der Innenring 62 weist einen mit der Welle 32 verbundenen zylindrischen Teil 62a und einen radial nach außen abfallenden, konischen Teil 62b auf, der das Schutzelement 61 bildet. Ähnlich, wie beim Gamma-Ring der Fig. 3 wird hier Schmutz am konischen Teil 62b einerseits durch die Schwerkraft und andererseits durch die Zentrifugalkräfte nach außen weggeschleudert.

Der Außenring 63 besteht beispielsweise aus Stahl und weist einen Trägerring 63b mit einer radial nach innen hin umgeformten Oberkante auf, an die die ringförmige Dichtlippe 63a und der Radialwellendichtring 63d einteilig angespritzt sind. Diese bestehen aus einem flexiblen Material, wie beispielsweise Silikon oder Gummi.

Die ringförmige Dichtlippe 63a greift hier über den konisch Teil 62b des Innenrings 62 und liegt beim Kontakt K an. Dadurch können die Verschmutzungen nicht ins Innere des Dichtungssystems 6 eindringen, sondern werden nach außen hin abgeleitet. Das obere, radial außenliegende Ende des konischen Teils 62b ist hier am äußeren Ende mit einer Stufe ausgebildet, um zusammen mit der ringförmigen Dichtlippe 63a einen möglichst gleichmäßigen Übergang zu bilden, wodurch sich Schmutz noch schlechter anlagern kann.

Darüberhinaus ist im Innenbereich des Dichtsystems 6 der Radialwellendichtring 63d mit der Dichtlippe 63f und dem Dichtungsrand 63e ausgebildet. Diese werden von dem Federring 63c gegen die Außenseite des Innenrings 62 gedrückt und bilden eine zusätzliche Dichtung. Dadurch kann das Eindringen von Verschmutzungen in den Innenbereich des Motors 3 (siehe Fig. 1) verhindert werden.

Bei dem Dichtsystem 6 treten die Dichtlippen 63a, 63f sowie der Dichtungsrand 63e lediglich in Kontakt mit dem Innenring 62. Dadurch entsteht kein Verschleiß an der Welle 32 sondern lediglich innerhalb des Dichtsystems 6, das dann ggf. deutlich kostengünstiger ausgetauscht werden kann.

Die nachfolgend in Bezug auf die Fig. 5 - 8 beschriebenen Ausführungsformen des Dichtsystems 7a, 7b, 8a, 8b unterscheiden sich von den in den Fig. 2 - 4 dargestellten Ausführungsformen im Wesentlichen dadurch, dass in Bezug auf die Abdichtung des Drehtellerdirektantriebs 1 der Drehteller 2 selbst bzw. das unmittelbar darunter ausgebildete tellerförmige Adapterelement 9 einen Teil des Dichtsystems bildet. Das Dichtsystem 7a, 7b, 8a, 8b ist dabei an einer äußeren, vertikal unten liegenden Unterseite 9a eines mit der Welle 32 fest verbundenen, tellerförmigen Adapterelements 9 angeordnet und umfasst eine die Unterseite 9a abdeckendes und die Ableitfläche bildendes Schutzelement 71a, 71b, 81a, 81b. Alternativ kann das Dichtsystem 7a, 7b, 8a, 8b genauso direkt an einer äußeren, vertikal unten liegenden Unterseite des Drehtellers 2 angeordnet sein.

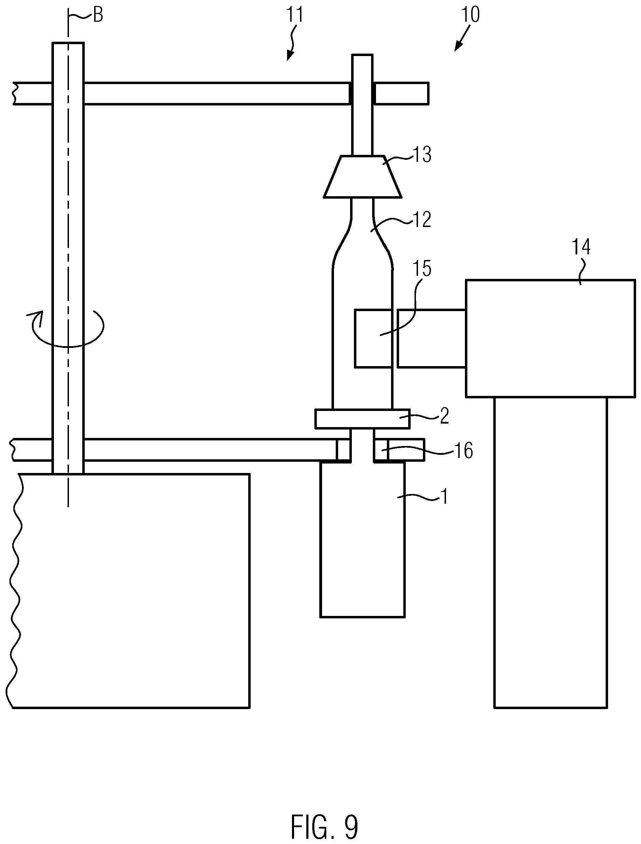

In der Fig. 5 ist als technischer Hintergrund eine vierte Ausführungsform des Dichtsystems 7a in einer seitlichen Detailansicht zu sehen (der Ausschnitt der Fig. 5 entspricht dem Detail D der Fig. 1). Das Dichtsystem 7a ist beim Drehtellerdirektantrieb 1 alternativ zum Dichtsystem 4 der Fig. 1 und 2 denkbar. Weiter ist auch hier der Drehtellerdirektantrieb 1 im Transportkarussell 11 befestigt (weiter nachfolgend in Bezug auf die Fig. 9 genauer beschrieben).

Zu sehen ist, dass hier die Welle 32 ebenfalls mehrteilig ausgebildet ist und die Innenwelle 32b, das Verbindungsstück 32a und zusätzlich das tellerförmige Adapterelement 9 umfasst. An ihrem oberen Ende ist die Welle 32 mit dem Drehteller 2 fest, also verdrehsicher verbunden. Das tellerförmige Adapterelement 9 bildet mit seiner Unterseite 9a denjenigen Reibpartner des Dichtsystems 7a, der sich mit der Welle 32 mitdreht. Demgegenüber ist der Axialwellendichtring 72 mit dem Gehäuse 31 des Drehtellerdirektantriebs 1 fest verbunden und bildet den anderen Reibpartner. Der Axialwellendichtring 72 umfasst die radial nach außen ansteigenden Dichtlippe 72a aus einem flexiblen Material, die die Unterseite 9a das tellerförmige Adapterelement 9 im Kontaktbereich K berührt. Im Betrieb gleitet also das tellerförmige Adapterelement 9 auf dem Axialwellendichtring 72.

Die Dichtlippe 72a weist eine radial nach außen ansteigende Form auf und bildet mit seiner Außenseite eine Ableitfläche für von außen eindringenden Schmutz und damit das Schutzelement 71a. Der Schmutz kann hier frei aus dem Kontaktbereich K nach unten hin abfließen und staut sich so nicht an. Dadurch wird verhindert, dass abrasive Partikel des Schmutzes die Dichtlippe 72a beschädigen bzw. Rillen in die Unterseite 9a des tellerförmigen Adapterelements 9 schleifen.

Der Axialwellendichtring 72 umfasst zusätzlich das ringförmige Aufnahmeblech 74 als Fassung, um ein verrutschen der Dichtlippe 72a zu verhindern und ist als ganzes über den Ring 75 mit dem Gehäuse 31 lösbar verbunden. Dadurch kann dieser besonders einfach ausgetauscht werden. Denkbar ist auch, dass der Ring 75 einen zusätzlichen Radialwellendichtring umfasst, der nochmals den Adapter 32a gegenüber dem Gehäuse 31 abdichtet. Dadurch wird das Eindringen von feinem Schmutz ins Innere des Gehäuses 31 verhindert.

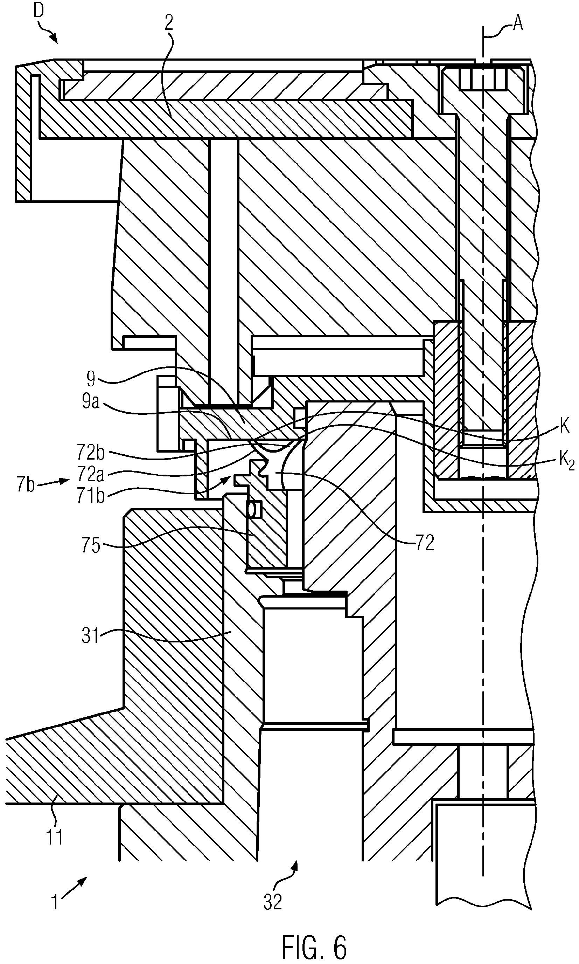

In der Fig. 6 ist als technischer Hintergrund eine fünfte Ausführungsform des Dichtsystems 7b in einer seitlichen Detailansicht zu sehen (der Ausschnitt der Fig. 6 entspricht der Fig. 5). Das Ausführungsbeispiel in der Fig. 6 unterscheidet sich von dem in der Fig. 5 lediglich dadurch, dass der Axialwellendichtring 72 zusätzlich eine radial nach innen ansteigende Dichtlippe 72b umfasst, deren radial nach innen gerichtetes Ende im Kontaktbereich K₂ an der Unterseite 9a des tellerförmigen Adapterelements 9 anliegt und die zusammen mit der radial nach außen ansteigenden Dichtlippe 72a eine Y-Anordnung bildet.

Durch die zusätzliche Dichtlippe 72b wird der Drehtellerdirektantrieb 1 noch besser vor dem Eindringen von Schmutz geschützt. Denkbar ist hier, dass sich zwischen den beiden Dichtlippen 72a, 72b ein Reservoir mit einem Schmierstoff, beispielsweise Fett, befindet, um eine gute Gleitwirkung zu gewährleisten.

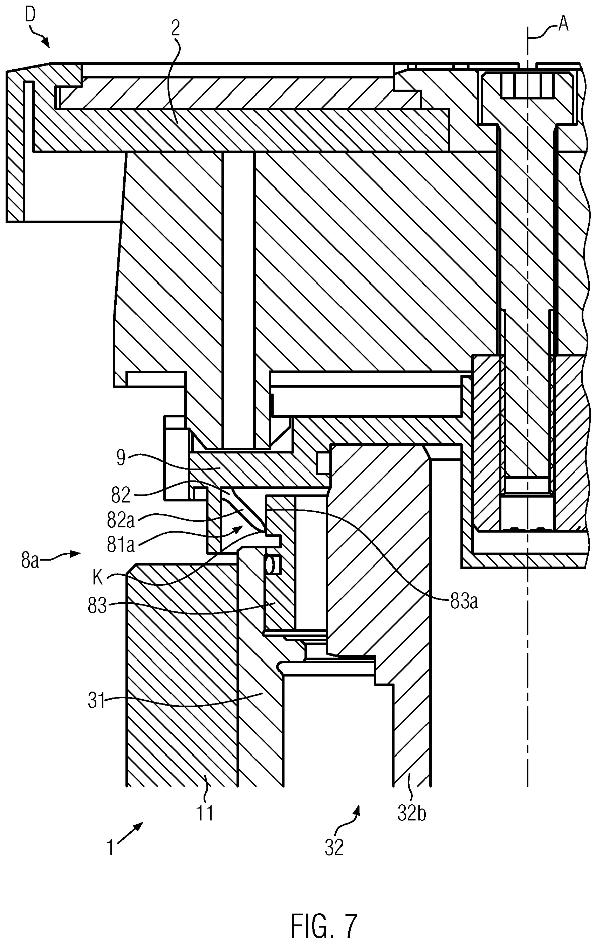

In der Fig. 7 ist als technischer Hintergrund eine sechste Ausführungsform des Dichtsystems 8a in einer seitlichen Detailansicht zu sehen (der Ausschnitt der Fig. 7 entspricht dem Detail D der Fig. 5). Das Dichtsystem 8a ist beim Drehtellerdirektantrieb 1 alternativ zum Dichtsystem 4 der Fig. 1 und 2 denkbar. Das Ausführungsbeispiel in der Fig. 7 unterscheidet sich von dem in der Fig. 5 im Wesentlichen dadurch, dass anstelle des mit dem Gehäuse 31 verbundenen Axialwellendichtrings hier der mit dem tellerförmigen Adapterelement 9 fest verbundene Radialwellendichtring 82 als Dichtung und Schutzelement 81a wirkt.

Zu sehen ist, dass der Radialwellendichtring 82 eine radial nach innen abfallende Dichtlippe 82a umfasst, deren radial nach innen gerichtetes Ende an der zylindrischen Außenseite 83a des Laufrings 83 anliegt. Der Laufring 83 ist wiederum konzentrisch um die Drehachse A als Einsatz in eine entsprechende Bohrung im Gehäuse 31 ausgebildet. Denkbar ist, dass der Laufring 83 Teil einer weiteren Dichtkassette mit einer Radialwellendichtung zur besseren Abdichtung der Welle 32 ist.

Der Radialwellendichtrung 82 kann weiter mit einer Fassung oder dergleichen ausgebildet sein, um eine lösbare Verbindung zum tellerförmigen Adapterelement 9 herzustellen. Dadurch kann er bei einem auftretenden Verschleiß leichter ausgetauscht werden. Als Fassung ist beispielsweise ein Ring um die Drehachse A mit einem nach innen offenen U-Profil denkbar.

Die Ableitfläche des Schutzelements 81a wird hier durch die radial nach innen abfallende Außenseite der Dichtlippe 82a gebildet. Eindringender Schmutz fließt durch die Schwerkraft an der Außenseite entlang und tropft am inneren Ende nach unten ab. Dadurch gelangt der Schmutz nicht in den Kontaktbereich K zwischen der Dichtlippe 82a und der Außenfläche 83a des Laufrings 83. Ferner ist im Laufring 83 unmittelbar unterhalb des Kontaktbereichs eine Nut vorgesehen, die als Abrisskante dient, so dass der Schmutz noch besser von der Dichtlippe 82 abtropft. Darüber hinaus ist zwischen dem radial nach innen gerichteten Ende der Lichtlippe 82a und dem Gehäuse 31 ein Abstand vorgesehen, so dass sich der Schmutz nicht dazwischen ansammeln kann. Denkbar ist auch, dass das Gehäuse 31 zum besseren Abführen des eindringenden Schmutzes im Bereich unterhalb des Schutzelements 81a nach außen abfallend ausgebildet ist.

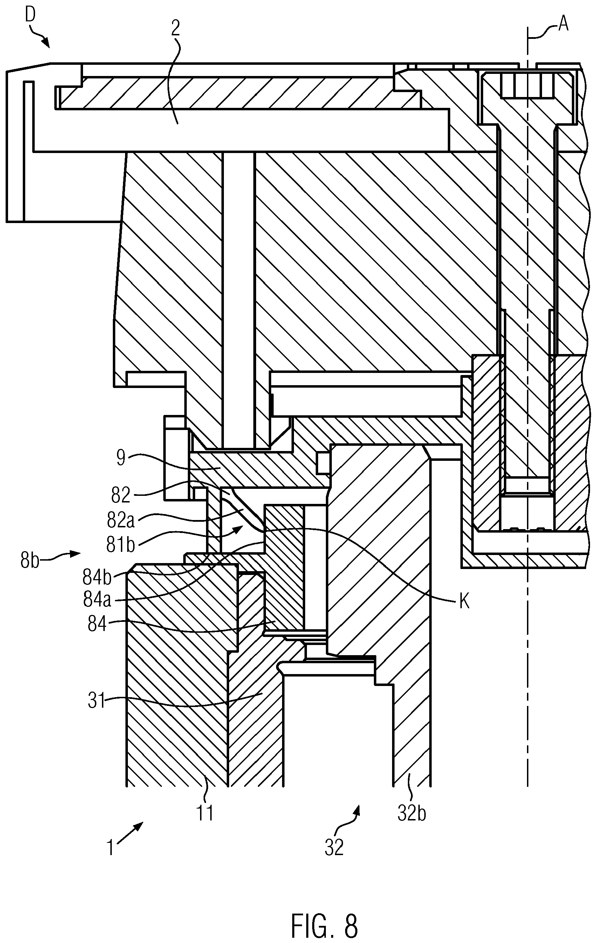

In der Fig. 8 ist als technischer Hintergrund eine siebte Ausführungsform des Dichtsystems 8b in einer seitlichen Detailansicht zu sehen (der Ausschnitt der Fig. 8 entspricht der Fig. 7). Das Ausführungsbeispiel in der Fig. 8 unterscheidet sich von dem in der Fig. 7 lediglich dadurch, dass der Laufring 84 mit seinem Flansch 84b an der Aufnahme 16 des Drehtellerdirektantriebs 1 befestigt ist und nicht am Motorgehäuse 31. Dadurch bilden das Motorgehäuse 31, die Aufnahme 16 des Drehtellerdirektantriebs 1 und der Laufring 84 eine fest verbundene Einheit. Die radial nach innen abfallende Dichtlippe 82a liegt auch hier an der zylindrischen Außenfläche 84a des Laufrings 84 an.

Die Aufnahme 16 des Drehtellerdirektantriebs 1 ist beispielsweise in dem nachfolgend in Bezug auf die Fig. 9 beschriebenen Transportkarussell 11 ausgebildet.

Die in den Fig. 1-8 dargestellten Dichtsysteme 4, 5, 6, 7a, 7b, 8a, 8b werden wie folgt eingesetzt: Der von außen eindringende Schmutz, beispielsweise kleine Glaspartikel, werden durch die Schutzelemente 41, 51, 61, 71a, 71b, 81a, 81b mittels den daran ausgebildeten Ableitflächen aus dem Kontaktbereich der beiden Reibpartner abgeleitet. Dadurch können sich die Schmutzpartikel nicht am Dichtsystem 4, 5, 6, 7a, 7b, 8a, 8b anlagern und verursachen dort keinen Verschleiß. Bei der zweiten, dritten, sechsten und siebten Ausführungsform des Dichtsystems 5, 6, 8a, 8b wird zusätzlich der eindringende Schmutz durch die Zentrifugalkraft der Rotationsbewegung nach außen weggeschleudert.
In der Figur 9 ist ein Ausführungsbeispiel einer Behälterbehandlungsmaschine 10 in einer Seitenansicht dargestellt, die hier als Etikettiermaschine ausgebildet ist. Zu sehen ist das Transportkarussell 11 mit den umfänglich angeordneten Drehtellern 2 und jeweils einem Drehtellerdirektantrieb 1. Diese bilden zusammen mit den Zentrierglocken 13 die Behälteraufnahmen. Zur Übersichtlichkeit ist hier nur ein Drehteller 2 mit einem Direktantrieb 1 dargestellt, es befinden sich jedoch umfänglich am Transportkarussell 11 eine Vielzahl derartiger Anordnungen in regelmäßigen Winkelabständen. Das Transportkarussell 11 dreht sich um seine Karussellachse B mittels eines hier nicht näher dargestellten Antriebs.
Im Betrieb werden die Behälter 12 mit dem Drehteller 2 und der Zentrierglocke 13 eingespannt und am Etikettieraggregat 14 vorbeigeführt. Beim Etikettieren werden sie mittels des Direktantriebs 1 definiert gedreht, so dass das Etikett 15 möglichst gleichmäßig am Behälterumfang angebracht wird.
Der von oben und von der Seite her eindringende Schmutz wird beim Direktantrieb 1 mit einem Dichtsystem 4, 5, 6, 7a, 7b, 8a, 8b entsprechend der Ausführungsbeispiele in den Fig. 1 - 9 nach außen hin abgeleitet. Dadurch wird sowohl ein Verschleiß der Dichtringe 42, 52, 62, 72a, 72b, 82a, 82b als auch der Welle 32 durch den eindringenden Schmutz verringert.
Insgesamt werden mit den Drehtellerdirektantrieben der Ausführungsbeispiele in den Fig. 1 - 9 Wartungsintervalle verlängert, wodurch deren Einsatz besonders kostengünstig ist.
Es versteht sich, dass in den zuvor beschriebenen Ausführungsbeispielen genannte Merkmale nicht auf diese speziellen Kombinationen beschränkt sind und in beliebigen anderen Kombinationen möglich sind, die nur durch den Inhalt der verbundenen Patentansprüche begrenzt werden.

## Patentansprüche

1. Behälterbehandlungsmaschine mit wenigstens einer einen Drehteller (2) umfassenden Behälteraufnahme und einem Drehtellerdirektantrieb (1) zum Antreiben des Drehtellers (2), wobei der Drehtellerdirektantrieb (1) einen Motor (3) mit einer Welle (32) zum Übertragen der Antriebskraft des Motors (3) auf den Drehteller (2) und ein Dichtsystem (6) mit wenigstens zwei Reibpartnern zum Abdichten der Welle (32) umfasst,
wobei das Dichtsystem (6) eine Ableitfläche zum Ableiten von eindringendem Schmutz aus einem Kontaktbereich (K) der beiden Reibpartner umfasst,
wobei das Dichtsystem (6) an einer äußeren, vertikal oben liegenden Stirnseite des Drehtellerdirektantriebs (1) angeordnet ist und ein die Stirnseite abdeckendes und die Ableitfläche bildendes Schutzelement (61) umfasst, das vom Kontaktbereich (K) radial nach außen abfallend ausgebildet ist, so dass eindringender Schmutz nach außen abgeleitet wird,
**dadurch gekennzeichnet, dass**
das Schutzelement (61) einen mit der Welle (32) mitdrehend verbundenen Innenring (62) mit einem radial nach außen abfallenden konischen Teil (62b) und einen gegenüber dem Gehäuse (31) feststehenden Außenring (63) mit einer ringförmigen Dichtlippe (63a) umfasst, wobei die Dichtlippe (63a) am konischen Teil (62b) des Innenrings (62) anliegt, und dass der Außenring (63) einen Radialwellendichtring (63d) umfasst, der mit wenigstens einer radial nach innen gerichteten Dichtlippe (63e, 63f) am Innenring (62) anliegt.

2. Behälterbehandlungsmaschine nach Anspruch 1, wobei die ringförmige Dichtlippe (63a) an einem oberen, radial außen liegenden Ende des konischen Teils (62b) anliegt.

3. Behälterbehandlungsmaschine nach Anspruch 1 oder 2, wobei der Außenring (63) einen Trägerring (63b) aus einem unflexiblen Material umfasst, an dessen oberen Ende die ringförmige Dichtlippe (63a) aus einem flexiblen Material ausgebildet ist.

4. Behälterbehandlungsmaschine nach einem der Ansprüche 1 - 3, wobei ein Federring (63c) zum Andrücken der radial nach innen gerichteten Dichtlippe (63e, 63f) an den Innenring (62) ausgebildet ist.

5. Behälterbehandlungsmaschine nach einem der Ansprüche 1 - 4, wobei der Radialwellendichtring (63d) einteilig mit der ringförmigen Dichtlippe (63a) ausgebildet ist.

## Claims

1. Container treatment machine comprising at least one container receptacle comprising a turntable (2) and a turntable direct drive (1) for driving the turntable (2), the turntable direct drive (1) comprising a motor (3) having a shaft (32) for transmitting the driving force of the motor (3) onto the turntable (2) and a sealing system (6) with at least two friction partners for sealing the shaft (32),
wherein the sealing system (6) comprises a discharge surface for discharging penetrating dirt from a contact region (K, K1, K2) of the two friction partners,
wherein the sealing system (6) is arranged on an outer, vertically upper end face of the turntable direct drive (1) and comprises an end face covering and the discharge surface forming protective element (61) which is formed sloping from the contact region (K) radially outward, so that penetrating dirt is discharged to the outside,
**characterized in that**
the protective element (61) has an inner ring (62) connected co-rotating with the shaft (32) with a radially outwardly sloping conical part (62b) and an outer ring fixed relative to the housing (31) with an annular sealing lip (63a), wherein the sealing lip (63a) rests on the conical part (62b) of the inner ring (62), and
that the outer ring (63) comprises a radial shaft sealing ring (63d) which with at least one radially inwardly directed sealing lip (63e, 63f) rests on the inner ring (62).

2. Container treatment machine according to claim 1, wherein the annular sealing lip (63a) rests on an upper, radially outwardly lying end of the conical part (62b).

3. Container treatment machine according to claim 1 or 2, wherein the outer ring (63) comprises a support ring (63b) made of an inflexible material, at the upper end of which the annular sealing lip (63a) is formed of a flexible material.

4. Container treatment machine according to one of claims 1 to 3, wherein a spring ring (63c) is formed for pressing the radially inwardly directed sealing lip (63e, 63f) onto the inner ring (62).

5. Container treatment machine according to one of claims 1 to 4, wherein the radial shaft sealing ring (63d) is integrally formed with the annular sealing lip (63a).

## Revendications

1. Machine de traitement de contenants comprenant au moins un système d'accueil de contenant, qui comporte un plateau rotatif (2) et un entraînement direct de plateau rotatif (1) pour entraîner le plateau rotatif (2), machine
dans laquelle l'entraînement direct de plateau rotatif (1) comprend un moteur (3) avec un arbre (32) pour transmettre la force d'entraînement du moteur (3) au plateau rotatif (2), et un système d'étanchéité (6) avec au moins deux partenaires de friction pour assurer l'étanchéité de l'arbre (32),
dans laquelle le système d'étanchéité (6) comprend une surface de déviation destinée à dévier des impuretés entrantes d'une zone de contact (K) des deux partenaires de friction, et
dans laquelle le système d'étanchéité (6) est agencé sur un côté frontal extérieur de l'entraînement direct de plateau rotatif (1), situé verticalement dans le haut, et comprend un élément de protection (61), qui recouvre le côté frontal et forme la surface de déviation, et qui est d'une configuration descendante radialement vers l'extérieur, à partir de la zone de contact (K), de sorte que les impuretés entrantes sont déviées vers l'extérieur,
**caractérisée**
**en ce que** l'élément de protection (61) comprend un anneau intérieur (62), qui est relié à l'arbre (32) en étant en rotation avec celui-ci et qui comporte une partie conique (62b) d'inclinaison descendante radialement vers l'extérieur, ainsi qu'un anneau extérieur (63) en position fixe par rapport au carter (31) et comportant une lèvre d'étanchéité (63a) de forme annulaire, la lèvre d'étanchéité (63a) s'appuyant contre la partie conique (62b) de l'anneau intérieur (62), et **en ce que** l'anneau extérieur 63) comprend un joint annulaire d'étanchéité d'arbre radial (63d), qui s'appuie, avec au moins une lèvre d'étanchéité (63e, 63f) dirigée radialement vers l'intérieur, contre l'anneau intérieur (62).

2. Machine de traitement de contenants selon la revendication 1, dans laquelle la lèvre d'étanchéité (63a) de forme annulaire s'appuie sur une extrémité supérieure de la partie conique (62b), située radialement à l'extérieur.

3. Machine de traitement de contenants selon la revendication 1 ou la revendication 2, dans laquelle l'anneau extérieur (63) comprend un anneau porteur (63b) en un matériau non flexible, à l'extrémité supérieure duquel est formée la lèvre d'étanchéité (63a) de forme annulaire, en un matériau flexible.

4. Machine de traitement de contenants selon l'une des revendications 1 - 3, dans laquelle une bague de ressort (63c) est conçue pour presser la lèvre d'étanchéité (63e, 63f) dirigée radialement vers l'intérieur, contre l'anneau intérieur (62).

5. Machine de traitement de contenants selon l'une des revendications 1 - 4, dans laquelle le joint annulaire d'étanchéité d'arbre radial (63d) est réalisé d'un seul tenant avec la lèvre d'étanchéité (63a) de forme annulaire.
